# EUROPÄISCHE PATENTSCHRIFT

(11) **EP 0 639 446 B1**
(45) Veröffentlichungstag und Bekanntmachung des Hinweises auf die Patenterteilung: **10.02.1999**
(21) Anmeldenummer: 94111573.5
(22) Anmeldetag: 25.07.1994
(51) Int. Cl.: B29D 22/00, B29C 45/00, C08J 5/04, C08J 3/22, C08L 23/06, B29K 23/00, B29K 105/12, B29K 309/08

(54) **Spritzgussteil aus faserverstärktem Thermoplastwerkstoff**
Injection moulded fibre reinforced thermoplastic article
Article moulé par injection en résine thermoplastique renforcée de fibres

(30) Priorität: 06.08.1993 DE 9311731 U
(43) Veröffentlichungstag der Anmeldung: 22.02.1995
(73) Patentinhaber: Ticona GmbH, 65451 Kelsterbach (DE)
(72) Erfinder: Skaletz, Detlef, Dr., D-55128 Mainz (DE); Heckel, Horst, D-64285 Darmstadt (DE); Mehmke, Karin, Dr., D-60486 Frankfurt (DE)

(56) Entgegenhaltungen:
- EP-A- 0 058 980
- EP-A- 0 276 828
- EP-A- 0 439 625
- EP-A- 0 459 321
- DE-U- 9 302 401
- US-A- 5 041 258
- DATABASE WPI Week 9127, Derwent Publications Ltd., London, GB; AN 91-196897 & JP-A-3 121 146 (POLYPLASTICS KK) 23. Mai 1991
- PATENT ABSTRACTS OF JAPAN vol. 13, no. 577 (M-910) 20. Dezember 1989 & JP-A-01 241 406 (MITSUBOSHI MELTING LTD) 26. September 1989
- ENGINEERING PLASTICS, Bd.4, Nr.3, 1991, SHROPSHIRE GB Seiten 188 - 197 STEVE T. BOWEN AND PATRICK H. JOHNSON 'Long Fibre Reinforced Thermoplastics for the Injection Moulding Process'
- KUNSTSTOFFE, Bd.65, Nr.2, 1975, MUNCHEN DE Seiten 58 - 63 DR.-ING. A. VON HARNIER 'Über Herstellung und Eigenschaften kohlenstoffaserverstärkter Thermoplaste'

## Beschreibung

Die Erfindung betrifft ein Spritzgußteil aus Thermoplastwerkstoff mit verbesserten mechanischen Eigenschaften, insbesondere bei wechselnden Temperaturen.

Der übliche Werkstoff für Transport- und Verpackungskästen sind Thermoplaste, vorzugsweise HD-Polyethylen. Solche Kästen dienen beispielsweise zur Aufnahme heißsterilisierter Getränke und heißer Lebensmittel, z.B. Brot, die direkt nach der Herstellung verpackt und anschließend in Kühlhäusern gelagert werden. Dabei werden beim Transport durch Stoß und Schlag und durch wechselnde Temperaturen die Kästen stark beansprucht und ihre Verwendbarkeit ist damit begrenzt.

Auch die Verwendung kurzfaserverstärkter Thermoplaste mit dem Ziel der Verbesserung der mechanischen Eigenschaften erbringt für diesen Verwendungszweck keine Vorteile, da bereits die Einlagerung geringer Kurzfaseranteile zur Versprödung führt (vgl. Plaste und Kautschuk Heft 5/1986, 184-187).

Aus der japanischen Patentanmeldung JP-3121146 ist eine Polyolefinzusammensetzung bekannt, die 5-80 Gew.-% Verstärkungsfasern, z.B. Glasfasern, enthält, wobei die Verstärkungsfasern eine Länge von mindestens 2 mm haben und im wesentlichen parallel zueinander angeordnet sind. Hieraus hergestellte Formteile weisen insbesondere eine gute Oberflächenbeschaffenheit und Dimensionsstabilität auf.

Der in den Patentansprüchen angegebenen Erfindung liegt die Aufgabe zugrunde, einen Thermoplastwerkstoff für spritzgegossene Formteile, die sich als Transport- und Verpackungskästen eignen, zu entwickeln, wobei die Formteile starken mechanischen Beanspruchungen, insbesondere bei wechselnden Temperaturen, ausgesetzt sind und sich durch eine hohe Steifigkeit, hohe Schlagzähigkeit und hohe Wärmeformbeständigkeit auszeichnen.

Erfindungsgemäß wird die Aufgabe durch ein Spritzgußformteil gelöst, das aus Thermoplastwerkstoff aufgebaut ist, der Glasfasern mit einer Faserlänge von mindestens 5 mm in einer Menge von 2 bis 8 Gew.-%, bezogen auf das Gesamtgewicht aus Glasfasern plus Thermoplastwerkstoff, enthält, wobei das Spritzgußformteil eine Schlagzähigkeit bei + 23°C von wenigstens 170 kJ/m² und eine Schlagzähigkeit bei - 30°C von wenigstens 140 kJ/m² besitzt.

In einer bevorzugten Ausgestaltung der Erfindung liegt die Menge an Glasfasern in dem Thermoplastwerkstoff im Bereich von 3 bis 6 Gew.-%.

Das Spritzgußformteil weist insbesondere einen Zug-E-Modul von 1600 bis 2500 N/mm², gemessen nach DIN 53457, und eine Schlagzähigkeit nach Charpy, gemessen nach ISO 179/1eU, bei + 23°C im Bereich von 170 bis 180 kJ/m² und bei - 30°C im Bereich von 140 bis 160 kJ/m² auf. Ferner besitzt es eine Wärmeformbeständigkeit HDT/A, gemessen nach DIN 53 461, im Bereich von 50 bis 80°C.

Der Thermoplastwerkstoff für das erfindungsgemäße Spritzgußformteil besteht vorzugsweise aus einer Mischung eines Polyethylens (A) mit einem langglasfaserverstärkten Polyethylen (B), wobei das Polyethylen (A) vorzugsweise eine Dichte im Bereich von 0,950 bis 0,957 g/cm³ und eine Viskositätszahl, gemessen nach DIN 53 728, im Bereich von 120 bis 160 cm³/g besitzt. Das Polyethylen (B) besteht vorzugsweise aus einem durch Schmelz-Pultrusion hergestellten langglasfaserverstärkten Polyethylen mit einer Viskositätszahl von ≥ 140 cm³/g und einem Glasfasergehalt im Bereich von 40 bis 60 Gew.-% Glasfasern. Dabei können die Polyethylene der beiden Mischungskomponenten gleicher oder verschiedener Art sein.

Überraschenderweise wurde gefunden, daß sich das erfindungsgemäße Spritzgußformteil durch eine deutliche Verbesserung seiner Schlagzähigkeit in Verbindung mit signifikant gesteigerter Wärmebeständigkeit auszeichnet, verglichen mit Spritzgußformteilen aus einfachen, nicht faserverstärkten Polyethylenen.

Mit seinen vorteilhaften physikalischen Eigenschaften kann ein erfindungsgemäßes Spritzgußformteil bei seinem bestimmungsgemäßen Einsatzzweck als Transport- und Verpackungskasten verlängerte Verwendungsdauer, insbesondere auch unter erhöhten mechanischen und thermischen Belastungen der Kästen erreichen.

Die Erfindung wird nachfolgend anhand eines konkreten Ausführungsbeispiels für den Fachmann noch anschaulicher erläutert.

### Beispiel 1:

In einem üblichen Taumelmischer wurden 19 Gewichtsteile (△ 95 Gew.-%) des Polyethylens (A) und 1 Gewichtsteil (△ 5 Gew.-%) des mit 60 Gew.-% langglasfaserverstärkten Polyethylens (B) gründlich vermischt. Der nominelle Glasfasergehalt des so erhaltenen Thermoplastwerkstoffes betrug 3 Gew.-%. Daraus wurden spritzgegossene Prüfkörper hergestellt, an denen die in Tabelle 1 dargestellten mechanischen Werte gemessen wurden, die zum Vergleich den entsprechenden Werten des reinen HD-Polyethylens (A) gegenübergestellt sind. Für den Spritzguß wurde eine Spritzgußmaschine der Firma NETSTAL mit offener Düse und einer Rückstromsperre eingesetzt. Die Maschine war mit einer Dreizonenschnecke bestückt, die auf ein Kompressionsverhältnis von 1,83 ausgelegt war. Folgende Spritzgußbedingungen wurden eingehalten:
- Zylindertemperatur:: 220 bis 250°C
- Massetemperatur:: 250 bis 254°C
- Werkzeugtemperatur:: 70°C
- Schneckendrehzahl:: 50 bis 70 rpm
- spezifischer Spritzdruck:: maximal 1700 bar
- spezifischer Staudruck:: 110 bar
- Einspritzgeschwindigkeit:: 45 bis 60 mm/s
- Nachdruckzeit:: 15 bis 20 s
- Kühlzeit:: 30 s

Das Polyethylen (A) wies eine Dichte von 0,957 g/cm³ und eine Viskositätszahl von 140 cm³/g auf. Für das langfaserverstärkte Polyethylen (B) wurde ein Glasfaserroving vorgeheizt und im Schmelz-Pultrusions-Verfahren mit geschmolzenem Polyethylen der Dichte 0,957 g/cm³ und der Viskositätszahl von 140 cm³/g imprägniert. Nach Abkühlung wurde der imprägnierte Faserstrang in Pellets von ca. 10 mm Länge geschnitten.

**TABELLE 1**

| Kennwert | Einheit | Norm | HD-PE (A) | erfindungsgemäße Mischung |
|---|---|---|---|---|
| Zug-E-Modul | N/mm² | DIN 53457 | 1320 | 1790 |
| Schlagzähigkeit nach Charpy/+23°C | kJ/m² | ISO 179/1eU | 167 | 179 |
| Schlagzähigkeit nach Charpy/-30°C | kJ/m² | ISO 179/1eU | 103 | 152 |
| Wärmeformbeständigkeit HDT/A | °C | DIN 53461 | 44 | 60 |

## Patentansprüche

1. Spritzgußformteil, das aus Thermoplastwerkstoff aufgebaut ist, der Glasfasern mit einer Faserlänge von mindestens 5 mm enthält, dadurch gekennzeichnet, daß die Menge der Glasfasern 2 bis 8 Gew.-%, bezogen auf das Gesamtgewicht aus Glasfasern plus Thermoplastwerkstoff, beträgt und das Spritzgußformteil eine Schlagzähigkeit bei + 23 °C von wenigstens 170 kJ/m² und eine Schlagzähigkeit bei - 30 °C von wenigstens 140 kJ/m² besitzt.

2. Spritzgußformteil nach Anspruch 1, dadurch gekennzeichnet, daß die Menge an Glasfasern in dem Thermoplastwerkstoff im Bereich von 3 bis 6 Gew.-% liegt.

3. Spritzgußformteil nach Anspruch 1 oder 2, dadurch gekennzeichnet, daß es einen Zug-E-Modul im Bereich von 1600 bis 2500 N/mm², eine Schlagzähigkeit nach Charpy bei + 23°C im Bereich von 170 bis 180 kJ/m² und bei -30°C im Bereich von 140 bis 160 kJ/m² und eine Wärmeformbeständigkeit HDT/A im Bereich von 50 bis 80°C besitzt.

4. Spritzgußformteil nach einem der Ansprüche 1 bis 3, dadurch gekennzeichnet, daß der Thermoplastwerkstoff aus einer Mischung eines Polyethylens (A) mit einem langglasfaserverstärkten Polyethylen (B) besteht.

5. Spritzgußformteil nach Anspruch 4, dadurch gekennzeichnet, daß das Polyethylen (A) eine Dichte im Bereich von 0,950 bis 0,957 g/cm³ und eine Viskositätszahl im Bereich von 120 bis 160 cm³/g besitzt.

6. Spritzgußformteil nach Anspruch 4, dadurch gekennzeichnet, daß das Polyethylen (B) aus einem durch Schmelz-Pultrusion hergestellten langglasfaserverstärkten Polyethylen mit einer Viskositätszahl von ≥ 140 cm³/g und einem Glasfasergehalt im Bereich von 40 bis 60 Gew.-% Glasfasern besteht.

7. Spritzgußformteil nach einem der Ansprüche 4 bis 6, dadurch gekennzeichnet, daß die Polyethylene der beiden Mischungskomponenten verschiedener Art sind.

8. Spritzgußformteil nach einem der Ansprüche 1 bis 7, dadurch gekennzeichnet, daß es die geometrische Form eines Transport- und Verpackungskastens besitzt.

9. Spritzgußformteil nach einem der Ansprüche 1 bis 7, dadurch gekennzeichnet, daß es die geometrische Form einer Behälterabdeckung besitzt.

## Claims

1. An injection molding which is built up from thermo-plastic material comprising glass fibers having a fiber length of at least 5 mm, wherein the amount of the glass fibers is from 2 to 8 % by weight, based on the total weight of glass fibers plus thermoplastic material, and the injection molding has an impact strength at +23°C of at least 170 kJ/m² and an impact strength at -30°C of at least 140 kJ/m².

2. An injection molding as claimed in claim 1, wherein the amount of glass fibers in the thermoplastic material is in the range from 3 to 6 % by weight.

3. An injection molding as claimed in claim 1 or 2, which has a tensile E modulus in the range from 1600 to 2500 N/mm², a Charpy impact strength at +23°C in the range from 170 to 180 kJ/m² and at -30°C in the range from 140 to 160 kJ/m² and a heat distortion temperature HDT/A in the range from 50 to 80°C.

4. An injection molding as claimed in one of claims 1 to 3, wherein the thermoplastic material comprises a mixture of a polyethylene (A) with a polyethylene (B) reinforced with long glass fibers.

5. An injection molding as claimed in claim 4, wherein the polyethylene (A) has a density in the range from 0.950 to 0.957 g/cm³ and a viscosity number in the range from 120 to 160 cm³/g.

6. An injection molding as claimed in claim 4, wherein the polyethylene (B) comprises a polyethylene which is prepared by melt pultrusion, is reinforced with long glass fibers and has a viscosity number of ≥ 140 cm³/g and a glass fiber content in the range from 40 to 60 % by weight of glass fibers.

7. An injection molding as claimed in one of claims 4 to 6, wherein the polyethylenes of the two components of the mixture are of a different type.

8. An injection molding as claimed in one of claims 1 to 7, which has the geometric shape of a transportation and packaging box.

9. An injection molding as claimed in one of claims 1 to 7, which has the geometric shape of a container cover.

## Revendications

1. Article moulé par injection, constitué d'un matériau thermoplastique, qui contient des fibres de verre d'une longueur de fibre d'au moins 5 mm, caractérisé en ce que la quantité des fibres de verre est de 2 à 8% en poids, rapportée au poids total des fibres de verre plus le matériau thermoplastique, et l'article moulé par injection possède une résistance au choc d'au moins 170 kJ/m² à + 23°C et une résistance au choc d'au moins 140 kJ/m² à - 30°C.

2. Article moulé par injection selon la revendication 1, caractérisé en ce que la quantité des fibres de verre dans le matériau thermoplastique est dans la plage de 3 à 6% en poids.

3. Article moulé par injection selon la revendication 1 ou 2, caractérisé en ce qu'il possède un module d'élasticité en traction dans la plage de 1600 à 2500 N/mm², une résistance au choc par essai Charpy dans la plage de 170 à 180 kJ/m² à + 23°C et dans la plage de 140 à 160 kJ/m² à - 30°C et une stabilité dimensionnelle à la chaleur HDT/A dans la plage de 50 à 80°C.

4. Article moulé par injection selon l'une des revendications 1 à 3, caractérisé en ce que le matériau thermoplastique est constitué d'un mélange de polyéthylène (A) avec un polyéthylène (B) renforcé de longues fibres de verre.

5. Article moulé par injection selon la revendication 4, caractérisé en ce que le polyéthylène (A) possède une masse spécifique dans la plage de 0,950 à 0,957 g/cm³ et un indice de viscosité dans la plage de 120 à 160 cm³/g.

6. Article moulé par injection selon la revendication 4, caractérisé en ce que le polyéthylène (B) est constitué d'un polyéthylène renforcé par de longues fibres de verre, fabriqué par fusion-pultrusion, présentant un indice de viscosité ≥ 140 cm³/g et une teneur en fibres de verre dans la plage de 40 à 60% en poids de fibres de verre.

7. Article moulé par injection selon l'une des revendications 4 à 6, caractérisé en ce que les polyéthylènes des deux composants du mélange sont de natures différentes.

8. Article moulé par injection selon l'une des revendications 1 à 7, caractérisé en ce qu'il possède la forme géométrique d'un conteneur de transport et d'emballage.

9. Article moulé par injection selon l'une des revendications 1 à 7, caractérisé en ce qu'il possède la forme géométrique d'un couvercle de récipient.
